**Europäisches Patentamt**

**European Patent Office**

**Office européen des brevets**

(19)

(11) Veröffentlichungsnummer: **0 058 229**
B1

(12)    # EUROPÄISCHE PATENTSCHRIFT

(45) Veröffentlichungstag der Patentschrift:
02.05.85

(21) Anmeldenummer: 81108339.3

(22) Anmeldetag: 15.10.81

(51) Int. Cl.⁴: **C 08 L 27/06,** C 08 F 6/22,
C 08 F 6/24 // (C08F6/22,
14:06),(C08F6/24, 14:06)

(54) **Verfahren zur Herstellung von Polyvinylchlorid und dessen Verwendung zur Herstellung von Folien auf schnellaufenden Kalandern.**

(30) Priorität: 18.02.81 DE 3105817

(43) Veröffentlichungstag der Anmeldung:
25.08.82 Patentblatt 82/34

(45) Bekanntmachung des Hinweises auf die Patenterteilung:
02.05.85 Patentblatt 85/18

(84) Benannte Vertragsstaaten:
**BE FR GB IT NL SE**

(56) Entgegenhaltungen:
**BE - A - 653 851**
**GB - A - 1 247 727**

(73) Patentinhaber: **CHEMISCHE WERKE HÜLS AG,**
**Postfach 1320, D-4370 Marl 1 (DE)**

(72) Erfinder: **Flatau, Karsten, Dr., An der Mühlenstege 22,**
**D-4358 Haltern (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vinylchloridpolymerisate besitzen schlechte Fliesseigenschaften, eine geringe Stabilität unter dynamischen Verarbeitungsbedingungen, sind schwierig zu formen und zum Fliessen oder Schmelzen zu bringen.

Wenn Vinylchloridpolymere in Formgegenstände übergeführt werden, dann wird das Polymerpulver im allgemeinen mit verschiedenen Zusätzen gemischt, z.B. Verarbeitungshilfsmitteln, wie Stabilisatoren und Gleitmittel, Pigmenten und Füllstoffen, je nachdem, welche Eigenschaften der Zusammensetzung verliehen werden sollen. Das Pulver (compound) wird erhitzt, um es in eine homogene oder gelierte Masse zu verschmelzen.Es ist schon aus Gründen der Wirtschaftlichkeit erwünscht, eine solche Wärmebehandlung möglichst kurz zu halten, d.h. es besteht der Wunsch, ein polymeres Material zu verarbeiten, das rasch verschmilzt oder geliert. Vinylchloridpolymerisate sollen schnell verarbeitbar sein, um hohe Ausstossgeschwindigkeiten auf schnellaufenden Verarbeitungsmaschinen zu erreichen. Bei der schnellen Verarbeitung dürfen sich Eigenschaften, wie die mechanische Festigkeit, die Transparenz und Oberflächenbeschaffenheit, nicht verschlechtern. Da nicht modifiziertes Polyvinylchlorid die Bedingung, schnell verarbeitbar zu sein nicht erfüllt, ist es erforderlich, der Polyvinylchlorid-Masse Verarbeitungshilfsmittel zuzusetzen.

Verfahren zur Verbesserung der Verarbeitungseigenschaften des Polyvinylchlorids sind bekannt. Dem fertigen Polyvinylchlorid werden beispielsweise Mischpolymerisate des Vinylchlorids mit anderen Monomeren, andere Polymerisate, z.B. Acrylnitril-Styrol-mischpolymerisate, Methylmethacrylat-Styrol-Mischpolymerisate oder auch Pfropfcopolymerisate ganz bestimmter Struktur zugesetzt (DE-B 24 14 561 und DE-B 19 52 839).

Das Verschneiden von Polyvinylchlorid mit anderen Polymerisaten bedeutet jedoch für den Verarbeiter einen weiteren Arbeitsgang und die getrennte Lagerhaltung des Modifiziermittels.

Die kompliziert aufgebauten Pfropfcopolymerisate (DE-B 24 14 561, DE-B 23 63 564 und DE-B 19 52 839), welche vor der Verarbeitung mit der Polyvinylchlorid-Masse verschnitten werden müssen, sind nur mit technisch grossem Aufwand herstellbar.

Auch das Einarbeiten wässriger Additivgemisch-Dispersionen (DE-A 27 09 404) bringt für den Verarbeiter keinen deutlichen technischen Fortschritt, denn das in der Dispersion enthaltene Wasser muss mit erheblichem Aufwand wieder aus der Formmasse verdampft werden.

Die Polymerisation bis zu einem Umsatz von 60 bis 80%, anschliessendes Entfernen des nicht umgesetzten Vinylchlorids, Zugabe von Methylmethacrylat und nachfolgende Methacrylatpolymerisation, sind technisch nicht befriedigend (DE-A 24 22 688). Es fallen grosse Mengen Rück-VC an, nicht umgesetztes Methylmethacrylat muss ausgeschleust werden. Darüber hinaus ist der Modifiziergehalt sehr hoch (35 bis 65%). Die Produkte werden für die Verarbeitung mit nicht modifiziertem Polyvinylchlorid verschnitten, womit ein weiterer Arbeitsgang mit dem dazugehörigen Aufwand notwendig ist.

Das Nachdosieren eines Comonomeren (DE-B 17 95 390) bei bestimmtem Umsatz erfordert eine genaue Umsatzbestimmung, aufwendige Regel- und Dosiereinrichtungen und bedeutet, dass z.B. für jedes % an eingebrachtem Vinylacetat der Erweichungspunkt des Homopolymerisat/Copolymerisatgemisches um 0,5 °C fällt (DE-A 26 06 934). Vinylchlorid-Ethylen-Copolymere besitzen zwar wie Vinylchlorid-Propen-Copolymere eine verbesserte Verarbeitbarkeit, doch geht dies ebenfalls auf Kosten einer erniedrigten Wärmedeformationstemperatur. Die Reaktionsführung ist schwierig zu gestalten, da monomeres Propen ein abbauendes Kettenübertragungsmittel ist und die Reaktionsgeschwindigkeit verlangsamt.

Die Herstellung von modifiziertem PVC, das sich schnell, z.B. auf Kalandern, zu Folien verarbeiten lässt, ist demnach von der Darstellung der Copolymeren, der Homo-Copolymergemische und der getrennten Darstellung von Pfropfcopolymerisaten her schwierig, bzw. bedeutet für den Verarbeiter zusätzlichen apparativen und zeitlichen Aufwand.

Die Aufgabe wird erfindungsgemäss gelöst durch Bereitstellung eines Verfahrens zur Herstellung von Polyvinylchlorid durch Suspensionspolymerisation in Gegenwart von monomerlöslichen Katalysatoren und üblichen Schutzkolloiden als Suspensionsstabilisatoren, das dadurch gekennzeichnet ist, dass man nach der Polymerisation den Latex eines Copolymeren, welches zu 75 bis 95 Gewichtsprozent aus Methylmethacrylat, zu 0 bis 20 Gewichtsprozent aus Styrol und zu 5 bis 25 Gewichtsprozent aus einem Acrylsäureester mit 4 bis 8 Kohlenstoffatomen im Alkoholteil besteht, wobei sich die Gewichtsprozente auf 100 addieren, in einer Menge von 0,1 bis 3 Gewichtsprozent Copolymerisat, bezogen auf Polyvinylchlorid, zufügt, unter weiterem Rühren die Fällung des Latex bewirkt und anschliessend das so modifizierte Suspensionspolymerisat durch übliches Abfiltrieren und Trocknen gewinnt.

In einer zweckmässigen Ausführungsform des Verfahrens führt man die Fällung des Latex mit üblichen Koagulationshilfsmitteln durch.

In einer bevorzugten Ausführungsform des Verfahrens bewirkt man die Fällung des Latex thermisch, indem man nach der Zugabe des Latex das Polymerisatgemisch unter weiterem Rühren 1 bis 60 min auf einer Temperatur von 50 bis 90 °C hält und anschliessend das so modifizierte Suspensionspolymerisat durch übliches Abfiltrieren und Trocknen gewinnt.

Es ist ferner vorteilhaft, wenn das Copolymere zu 80 bis 90 Gewichtsprozent aus Methylmethacrylat, zu 5 bis 10 Gewichtsprozent aus Styrol und zu 5 bis 10 Gewichtsprozent aus einem Acrylsäureester mit 4 bis 8 Kohlenstoffatomen im Alkoholteil besteht.

Besonders vorteilhaft ist es, wenn der Acrylsäureester des Copolymeren ein Acrylsäurebutylester oder ein Acrylsäure-2-ethylhexylester ist.

In einer weiteren bevorzugten Ausführungsform des Verfahrens gibt man zugleich mit dem Latex des Copolymeren 0,1 bis 0,3 Gewichtsprozent, bezogen auf Polyvinylchlorid, eines üblichen äusseren Gleitmittels zu.

Das so hergestellte Polyvinylchlorid kann mit besonderen Vorteilen Verwendung zur Herstellung von Folien auf schnellaufenden Kalandern finden.

Die Suspensionspolymerisation des Vinylchlorids erfolgt in Gegenwart üblicher monomerenlöslicher Katalysatoren, z.B. solchen aus den Gruppen der Diacyl-, Dialkyl- oder Aroylperoxide, wie beispielsweise Diacetyl-, Dibenzoyl-, Dilauroyl-, 2,4-Dichlorbenzoylperoxid; der Peroxidicarbonate, wie Diisopropyl-, Dicyclohexyl-, Ditert.-butylcyclohexyl-, Diethylcyclohexyl-, Dimyristyrl-, Dicetyl-, Distearylperoxidicarbonat; der Perester, wie Isopropyl-, tert.-Butylperacetat, tert.-Butylperoctoat, tert.-Butylperpivalat, tert.-Butyl-, Iso-Amylperneodecanoat; der gemischten Anhydride organischer Sulfopersäuren und organischer Säuren, wie z.B. Acetylcyclohexylsulfonylperoxid; der Azoverbindungen, wie z.B. Azoisobuttersäurenitril und Azobisdimethylvalerodinitril. Die Katalysatoren können in Mengen von 0,01 bis 0,3 Gewichtsprozent, bezogen auf Vinylchlorid, eingesetzt werden.

Ferner kann die Suspensionspolymerisation in Gegenwart von einem oder mehreren Schutzkolloiden, wie beispielsweise teilverseifte Polyvinylacetate, Cellulosederivate, wie wasserlösliche Methylcellulose, Carboximethylcellulose, Hydroxiethylcellulose, Methylhydroxipropylcellulose, sowie Gelatine, ferner Polyalkylenoxide oder Mischpolymerisate von Maleinsäure bzw. deren Halbestern und Styrolen, stattfinden. Die Mengen der eingesetzten Schutzkolloide kann 0,01 bis 1 Gewichtsprozent, vorzugsweise 0,05 bis 0,4, betragen.

Ausserdem kann die Polymerisation in Gegenwart von 0,01 bis 5 Gewichtsprozent, bezogen auf Monomere, von Cosuspensionsmitteln durchgeführt werden, welche in Mischung mit den obengenannten Schutzkolloiden eingesetzt werden. Als Cosuspensionsmittel sind beispielsweise geeignet: Teilfettsäureester mehrwertiger Alkohole, wie Glycerinmonostearat, Sorbitmonolaurat, -oleat oder -palmitat, Polyoxiethylenether von Fettalkoholen oder aromatischen Hydroxiverbindungen; Polyoxiethylenester von Fettsäuren, Polypropylenoxid-Polyethylenoxid-Kondensationsprodukte sowie teilverseifte Polyvinylacetate mit einem Verseifungsgrad von ca. 30 bis 50 Mol%.

Die Polymerisationstemperatur der Suspensionspolymerisation wird im allgemeinen 30 bis 70 °C betragen. Die so erhaltenen Suspensionspolymerisate haben K-Werte von 50 bis 70, vorzugsweise 55 bis 65.

Das Rühren kann mit üblichen Impeller-Rührern erfolgen.

Die Suspensionspolymerisation kann auch in Gegenwart von Gleitmitteln für Polyvinylchlorid, wie Fettsäure-Folgeprodukte (z.B. Dicarbonsäureester von Fettalkoholen), Wachssäure-Folgeprodukte (z.B. Montansäureester oder teilverseifte Montansäureester) sowie Kohlenwasserstoff-Wachsen (z.B. Polyethylenwachse), durchgeführt werden. In diesem Falle werden 0,05 bis 1,5 Gewichtsprozent, vorzugsweise 0,1 bis 1,0 Gewichtsprozent, an Gleitmittel, bezogen auf Monomeres, dem Polymerisationsansatz von Anfang an zugesetzt.

Nach beendeter Suspensionspolymerisation oder vor bzw. nach dem Druckabfall im Polymerisationskessel werden 0,1 bis 3,0 Gewichtsprozent, vorzugsweise 0,5 bis 1,5 Gewichtsprozent, eines Copolymerisates in Latexform zugegeben. Dieses Copolymerisat besteht zu 75 bis 95 Gewichtsprozent aus Methylmethacrylat, zu 0 bis 20 Gewichtsprozent aus Styrol und zu 5 bis 25 Gewichtsprozent aus einem Acrylsäureester mit 4 bis 8 Kohlenstoffatomen im Alkoholteil, wobei sich die angegebenen Gewichtsprozente auf 100% addieren.

Als Acrylsäureester mit 4 bis 8 Kohlenstoffatomen im Alkoholteil kann Acrylsäure-n-butylester, Acrylsäure-n-hexylester, Acrylsäure-n-octylester oder Acrylsäure-2-ethylhexylester eingesetzt werden.

Der Copolymerisat-Latex wird durch übliche Emulsionspolymerisation hergestellt. Als Katalysatoren geeignet sind alle in der Emulsionspolymerisation üblichen wasserlöslichen Radikalkatalysatoren, z.B. Persulfate, wie Kalium-, Natriumoder Ammoniumpersulfat, Wasserstoffperoxid, tert.-Butylhydroperoxid, Na-Perborat, K-Percarbonat, oder andere wasserlösliche Peroxide, sowie auch entsprechende Gemische. Im Falle von peroxidischen Katalysatoren können diese auch in Gegenwart von 0,01 bis 1 Gewichtsprozent, bezogen auf Monomere, einer oder mehrerer reduzierender Substanzen, die zum Aufbau eines Redoxy-Katalysatorsystems geeignet sind, wie z.B. Sulfite, Bisulfite, Dithionite, Thiosulfate, Aldehyd-Sulfoxylate, z.B. Formaldehydsulfoxylat, eingesetzt werden.

Im allgemeinen sind etwa 0,075 bis 0,1 Gewichtsprozent, bezogen auf das Gewicht der Monomeren, an Katalysator oder Redoxsystem erforderlich.

Ausserdem kann die Emulsionspolymerisation in Gegenwart von 0,01 bis 5 Gewichtsprozent, bezogen auf Monomere, von einem oder mehreren Emulgatoren durchgeführt werden. Als Emulgatoren können anionische, amphotere, kationische sowie nichtionogene verwendet werden. Als anionische Emulgatoren sind beispielsweise geeignet: Alkali-, Erdalkali-, Ammoniumsalze von Fettsäuren, wie Laurin-, Palmitin-, oder Stearinsäure; von sauren Fettalkoholschwefelsäureestern; von Paraffinsulfonsäuren; von Alkylarylsulfonsäuren, wie Dodecylbenzol- oder Dibutylnaphthalinsulfonsäure, von Sulfobernsteinsäuredialkylestern, sowie die Alkali- und Ammoniumsalze von epoxigruppenhaltigen Fettsäuren, wie Epoxistearinsäure. Als amphotere bzw. kationenaktive Emulgatoren sind beispielsweise geeignet: Alkylbetaine, wie Dodecylbetain, sowie Alkylpyridiniumsalze, wie Laurylpyridiniumhydrochlorid; ferner Alkylammoniumsalze, wie Oxethyldodecylammoniumchlorid. Als nichtionogene Emulgatoren kommen beispielsweise infrage: Teilfettsäureester mehrwertiger Alkohole, wie Glycerinmonostearat, Sorbitmonolaurat, -oleat oder -palmitat; Polyoxiethylenether von Fettalkoholen oder aromatischen Hydroxiverbindungen; Polyoxiethylenester von Fettsäuren sowie Polypropylenoxid-Polyethylenoxid- Kondensationsprodukte.

Die Emulsionspolymerisation wird bei üblichen Temperaturen von 30 bis 90 °C, vorzugsweise 60 bis 70 °C, und üblichen Drucken durch Batch- oder Zulauf-Verfahrensweise, wobei ein Teil der Monomeren vorgelegt und der Rest nachdosiert wird, durchgeführt.

Ausser dem Methylmethacrylat-CopolymerLatex kann zu gleicher Zeit auch eine Additiv-Dispersion, z.B. eine Gleitmitteldispersion, getrennt oder im Gemisch mit der Methacrylat-Copolymer-Dispersion, dem Suspensions-Polymerisat zugegeben werden. Das Gleitmittel kann zu dieser Zeit auch in fester Form zum Gemisch aus PVC-Suspension und Copolymer-Latex gegeben werden, wobei Mengen von 0,05 bis 1,5%, vorzugsweise 0,1 bis 1,5%, eingesetzt werden.

Als Gleitmittel lassen sich verwenden: Fettsäure-Folgeprodukte, wie z.B. Dicarbonsäureester von Fettalkoholen, Wachssäure-Folgeprodukte, wie z.B. Montansäureester oder teilverseifte Montansäureester, und KohlenwasserstoffWachse, wie z.B. Polyethylen-Wachse.

Das Suspensions-Latex-Gemisch wird zunächst intensiv gemischt und diese Mischung kann bei Temperaturen von 50 bis 90 °C, vorzugsweise 65 bis 85 °C, während einer Zeitspanne von 1 bis 60 min, vorzugsweise 20 bis 45 min, mit den in der Suspensionspolymerisation üblichen Rührgeschwindigkeiten gerührt werden. Durch diese Massnahme wird das Copolymerisat gleichmässig auf das Suspensions-Polyvinylchlorid ausgefällt. Längeres Rühren bei 50 bis 90 °C verbessert das Ergebnis nicht.

Gleichzeitig mit dem Rühren des Suspensions-Latex-Gemisches bei 50 bis 90 °C kann auch die sich üblicherweise an die Polymerisation anschliessende Kesselentgasung zur Rück-VC-Gewinnung betrieben werden.

Die Fällung des Copolymerisat-Latex auf das Suspensions-Polyvinylchlorid kann auch mit Hilfe von Koagulationsmitteln durchgeführt werden. Als Koagulationsmittel lassen sich z.B. Salze, wie Natriumchlorid oder Calciumchlorid einsetzen.

Das suspendierte, modifizierte Polyvinylchlorid kann nach den für Suspensions-Polyvinylchlorid üblichen Aufarbeitungsverfahren, d.h. durch Abfiltrieren oder Zentrifigieren isoliert und sodann getrocknet werden.

Die mit der Erfindung erzielten Vorteile bestehen darin, dass durch das Verfahren eine technisch einfache Herstellung von modifiziertem Polyvinylchlorid, das rasch verschmilzt und sich so auf schnellaufenden Kalandern leicht verarbeiten lässt, gegeben ist. Die genannten Probleme bei der Herstellung schnell verarbeitbarer Polyvinylchloridmassen, Herstellung von Pfropfmischpolymerisaten als Modifier, das Verschneiden von Polymeren etc. sind auf einfache Weise zu umgehen.

Die erfindungsgemäss hergestellten Polyvinylchloridmassen besitzen die für die leichte, schnelle Verarbeitbarkeit geforderten Verschmelzungseigenschaften. Die Produkte lassen sich auf schnellaufenden Kalandern zu transparenten, fliesslinienfreien Folien bei hohen Abzugsgeschwindigkeiten und guter Verarbeitungsbreite verarbeiten. Die Folien sind in Gegenwart von Verarbeitungsmitteln, wie Methylmethacrylat-Butadien-Styrol-Pfropfcopolymerisat (MBS), gut tiefziehfähig.

Die Produkte besitzen herausragende Schnelllaufeigenschaften, zeigen grosse Verarbeitungsbreite, keine Kleben, ruhigen Knetverlauf und Stippenarmut. Sie eignen sich zur Herstellung von Glasklarfolien und pigmentierten Folien.

Das erfindungsgemässe Verfahren und die resultierenden Produkteigenschaften werden in den folgenden Beispielen und Tabellen erläutert.

Herstellung des Modifizierlatex

In einem 685 1-Polymerisationsreaktor werden 337,25 kg Wasser, 225 g Kaliumpersulfat und 525 g 20% Alkansulfonat gegeben. In die Vorlage werden über zwei Zuleitungen in 6 Stunden ein Monomergemisch aus 120,0 kg Methylmethacrylat, 15 kg 2-Ethylhexylacrylat und 15 kg Styrol und 12 l 7,8%ige Alkansulfonatlösung gleichmässig eingefahren. Nach insgesamt 8stündiger Reaktion bei 60 °C wird ein 30%iger Latex erhalten.

Vinylchloridsuspensionspolymerisation

Ein mit Impellerrührer versehener 150 l-Edelstahlautoklav wurde mit 57,3 kg vollentsalztem Wasser, 40 kg Vinylchlorid, 0,1% Methylhydroxipropylcellulose, 0,05% Hydroxipropylcellulose, 0,03% Sorbitanmonolaurat, 0,1% Dilauroylperoxid und 0,05% Dicetylperoxidicarbonat beschickt. Die Prozentangaben beziehen sich auf die eingesetzte Vinylchloridmenge. Nach Aufheizen auf 67 °C wurde bei einer Rührerdrehzahl von 180 Upm in 6 Stunden bis zu einem Umsatz von 90% polymerisiert. Die erhaltene Polyvinylchlorid-Suspension wurde für den folgenden Koagulationsversuch eingesetzt.

Herstellung des modifizierten Polyvinylchlorids

In die zuvor beschriebene Polyvinylchlorid-Suspension wird nach beendeter Polymerisation unter Aufrechterhaltung der Polymerisationstemperatur die oben beschriebene (Meth)acrylat-Copolymerdispersion (1,5% Copolymerisat fest bezogen auf PVC), welche 0,2% (bezogen auf PVC) eines äusseren Gleitmittels dispergiert enthält, gefahren.

Das Suspensions-Dispersions-Gemisch wird eine Stunde lang bei 67 °C vermischt und dann zur Fällung der dispergierten Latexteilchen auf das PVC-Korn eine Stunde bei 85 °C gehalten. Das so modifizierte Polyvinylchlorid wird abgenutscht und getrocknet.

Die durch das erfindungsgemässe Verfahren erzielten Verbesserungen werden durch Bestimmung der Schmelzviskosität, der Plastifizierzeit und der Walzenabzugsgeschwindigkeit deutlich (Tabellen 1 bis 3).

Schmelzviskosität und Walzverhalten

Das wie oben hergestellte modifizierte Polyvinylchlorid (100 Gewichtsteile) wurde mit 1,5 Gewichtsteilen Stabilisator homogenisiert und auf einer Walze zu einer homogenen Schmelze und zum Fell weiterverarbeitet. Es wurden folgende Walzbedingungen eingestellt:

| | |
|---|---|
| Spaltweite | = 0,4 mm |
| Friktion | = 1:1,2 (22,5:27 $sec^{-1}$) |
| Temperatur | = 190 °C (im Knet) |
| Walzdauer | = 5 Minuten je Fell |

Bestimmt wurden die maximale walzentrennende Kraft $W_{max}$ und die walzentrennende Kraft am Ende des Walzvorganges (Tabelle 1).

Tabelle 1

| Produkt | $W_{max}$[N] | $W_{end}$[N] |
|---|---|---|
| nicht modifiziertes PVC | 3650 | 3375 |
| erfindungsgemäss hergestelltes modifiziertes PVC | 3050 | 2800 |

In den $W_{max}$- und $W_{end}$-Werten spiegelt sich der viskositätserniedrigende Effekt der erfindungsgemässen Modifizierung.

Tabelle 2
Messung im Hochdruckkapillarrheometer bei 190 °C

| Produkt | | | | |
|---|---|---|---|---|
| Viskosität η [Pas] bei Schergeschwindigkeit γ [$s^{-1}$] | | | | |
| | 30 $s^{-1}$ | 100 $s^{-1}$ | 1000 $s^{-1}$ | 5000 $s^{-1}$ |
| nicht modifiziertes PVC | 9470 | 4250 | 750 | 187 |
| erfindungsgemäss hergestelltes modifiziertes PVC | 8250 | 3820 | 682 | 168 |

Für die Messung wurden die bei 190 °C hergestellten Walzfelle zerkleinert und bei 190 °C extrudiert.

Das Kalandrierverhalten wird durch Angabe des Trübungsbeginns und der Klebneigung charakterisiert (Tabelle 3). Als Trübungspunkt gilt die Abzugsgeschwindigkeit, bei der die Folie bei einem bestimmten Temperaturprogramm nur eine geringfügige Trübung aufweist und nicht auf den Walzen klebt. Der Trübungspunkt wird bei tieferem Temperaturniveau früher beobachtet und hängt von der Trennwirkung des zugegebenen Gleitmittels ab.

Tabelle 3

| Versuch | Gewichtsteile nicht modifiziertes PVC | erfindungs- gemäss modifiziertes PVC |
|---|---|---|
| Rezeptur | 100 | 100 |
| Irgastab® 17 MOK[1] | 1,5 | 1,5 |
| Loxiol® G 10[2] | 0,8 | 0,8 |
| Loxiol® G 20[3] | 0,2 | 0,2 |
| Loxiol® G 70[4] | 0,5 | 0,5 |
| Kalandiergeschwindigkeit m/min bei Beginn der Eintrübung | 7,5 | 12 |

[1] schwefelhaltiger Zinn-Stabilisator
[2] Polyol-Fettsäureester
[3] Stearinsäure
[4] hochmolekulare Fettsäure-Komplexester

Die Herstellung von Folien auf schnellaufenden Kalandern ist in H. Saechtling «Kunststoff-Taschenbuch», 21. Ausgabe 1979, Carl Hanser Verlag München, SEite 245, beschrieben.

**Patentansprüche**

1. Verfahren zur Herstellung von Polyvinylchlorid durch Suspensionspolymerisation in Gegenwart von monomerlöslichen Katalysatoren und üblichen Schutzkolloiden als Suspensionsstabilisatoren, dadurch gekennzeichnet, dass man nach der Polymerisation den Latex eines Copolymeren, welches zu 75 bis 95 Gewichtsprozent aus Methylmethacrylat, zu 0 bis 20 Gewichtsprozent aus Styrol und zu 5 bis 25 Gewichtsprozent aus einem Acrylsäureester mit 4 bis 8 Kohlenstoffatomen im Alkoholteil besteht, wobei sich die Gewichtsprozente auf 100 addieren, in einer Menge von 0,1 bis 3 Gewichtsprozent Copolymerisat, bezogen auf Polyvinylchlorid, zufügt, unter weiterem Rühren die Fällung des Latex bewirkt und anschliessend das so modifizierte Suspensionspolymerisat durch übliches Abfiltrieren und Trocknen gewinnt.

2. Verfahren nach Anspruch 1, dadurch gekennzeichnet, dass man die Fällung des Latex mit Koagulationshilfsmitteln durchführt.

3. Verfahren nach Anspruch 1, dadurch gekennzeichnet, dass man die Fällung des Latex thermisch bewirkt, indem man nach der Zugabe des Latex des Polymerisatgemisch unter weiterem Rühren 1 bis 60 min auf einer Temperatur von 50 bis 90 °C hält und anschliessend das so modifizierte Suspensionspolymerisat durch Abfiltrieren und Trocknen gewinnt.

4. Verfahren nach den Ansprüchen 1 bis 3, dadurch gekennzeichnet, dass das Copolymere zu 80 bis 90 Gewichtsprozent aus Methylmethacrylat, zu 5 bis 10 Gewichtsprozent aus Styrol und zu 5 bis 10 Gewichtsprozent aus einem Acrylsäureester mit 4 bis 8 Kohlenstoffatomen im Alkoholteil besteht.

5. Verfahren nach den Ansprüchen 1 bis 4, dadurch gekennzeichnet, dass der Acrylsäureester des Copolymeren ein Acrylsäurebutylester oder ein Acrylsäure-2-ethylhexylester ist.

6. Verfahren nach den Ansprüchen 1 bis 5, dadurch gekennzeichnet, dass man zugleich mit dem Latex des Copolymeren 0,1 bis 0,3 Gewichtsprozent, bezogen auf Polyvinylchlorid, eines äusseren Gleitmittels zugibt.

7. Verwendung des nach den Ansprüchen 1 bis 6 hergestellten modifizierten Polyvinylchlorids zur Herstellung von Folien auf schnellaufenden Kalandern.

**Revendications**

1. Procédé de préparation de polychlorure de vinyle par polymérisation en suspension, en présence de catalyseurs solubles dans le monomère et de colloïdes protecteurs usuels comme stabilisatns de suspension, caractérisé par le fait qu'après la polymérisation on ajoute la latex d'un copolymère qui est formé de 75 à 95% en poids de méthacrylate de méthyle, de zéro à 20% en poids de styrène et de 5 à 25% en poids d'un ester d'acide acrylique contenant de 4 à 8 atomes de carbone dans le fragment, alcoolique, l'additon des pourcentages en poids donnant 100, à raison de 0,1 à 3% en poids de produit de copolymérisation relativement au polychlorure de vinyle, qu'en continuant d'agiter on provoque la précipitation du latex et qu'on obtient ensuite, par filtration usuelle et séchage, le produit de polymérisation ainsi modifié.

2. Procédé selon la revendication 1, caractérisé par le fait que l'on conduit la précipitation du latex avec des adjuvants de coagulation.

3. Procédé selon la revendication 1, caractérisé par le fait que l'on provoque thermiquement la précipitation du latex, par le fait qu'après l'addition du latex, on maintient le mélange de produit de polymérisation pendant 1 à 60 mn à une température de 60 à 90 °C en continuant d'agiter et qu'ensuite on obtient par filtration et séchage, le produit de polymérisation en suspension ainsi modifié.

4. Procédé selon les revendications 1 à 3, caractérisé par le fait que le copolymère est formé de 80 à 90% en poids de méthacrylate de méthyle, de 5 à 10% en poids de styrène et 5 à 10% en poids d'un ester d'acide acrylique contenant de 4 à 8 atomes de carbone dans le fragment alcoolique.

5. Procédé selon les revendications 1 à 4, caractérisé par le fait que l'ester d'acide acrylique du copolymère est un acrylate de butyle ou un acrylate de 2-éthylhexyle.

6. Procédé selon les revendications 1 à 5, caractérisé par le fait que l'on ajoute, en même temps que le latex du copolymère, de 0,1 à 0,3% en poids d'un lubrifiant extérieur, relativement au polychlorure de vinyle.

7. Utilisation du polychlorure de vinyle modifié préparé selon les revendications 1 à 6 pour la fabrication de feuilles sur des calandres rapides.

**Claims**

1. A process for the production of polyvinylchloride by suspension polymerisation in the presence of a monomersoluble catalyst and a known protective colloid as suspension stabiliser, characerised in that after the polymerisation the latex of a copolymer of 75 to 95% by weight of methyl methacrylate, 0 to 20% by weight of styrene and 5 to 25% by weight of an acrylic acid ester of 4 to 8 carbon atoms in the alcohol moiety, said weight percentages adding up to 100, is added in an amount of 0.1 to 3% by weight of copolymer based on polyvinylchloride, the precipitation of the latex is caused to occur with further stirring, and then the resulting modified suspension polymer is recovered by filtration and drying in known manner.

2. A process according to claim 1, characerised in that the precipitation of the latex is carried out with the aid of a coagulation assistant.

3. A process according to claim 1, characterised in that the precipitation of the latex is caused to occur by thermal means, in which the polymer mixture after addition of the latex is held at a temperature of 50 to 90 °C for 1 to 60 minutes with further stirring and then the resulting modified suspension polymer is recovered by filtration and drying.

4. A process according to any of claims 1 to 3, characterised in that the copolymer consists of 80 to 90% by weight methyl methacrylate, 5 to 10% by weight styrene and 5 to 10% by weight of an acrylic acid ester of 4 to 8 carbon atoms in the alcohol moiety.

5. A process according to any of claims 1 to 4, characterised in that the acrylic acid ester of the copolymer is a butyl acrylate or a 2-ethylhexyl acrylate.

6. A process according to any of claims 1 to 5, characterised in that 0.1 to 0.3% by weight, based on polyvinylchloride, of an external lubricant is added simultaneously with the latex of the copolymer.

7. The use of a modified polyvinylchloride produced according ot any of claims 1 to 6 for the production of films on fast-running calender rolls.